# EUROPÄISCHE PATENTANMELDUNG

(11) **EP 3 587 062 A1**
(43) Veröffentlichungstag der Anmeldung: **01.01.2020**
(21) Anmeldenummer: 19172455.8
(22) Anmeldetag: 03.05.2019
(51) Int. Cl.: B29C 33/68, B29C 51/08, A61C 7/08

(54) **VORRICHTUNG ZUR HERSTELLUNG EINER ZAHNSCHIENE**

(30) Priorität: 07.05.2018 DE 202018102517 U
(71) Anmelder: Elident GmbH, 40724 Hilden (DE)
(72) Erfinder: JO, Yong-min, 40237 Düsseldorf (DE)
(74) Vertreter: Pellengahr, Maximilian Rudolf

(57) **Zusammenfassung**

Die vorliegende Anmeldung betrifft eine Vorrichtung (1) zur Herstellung einer Zahnschiene, umfassend ein Zahnmodell (2), eine Schienenfolie (4) und eine Trennfolie (3), wobei die Trennfolie (3) und die Schienenfolie (4) gemeinsam über das Zahnmodell (2) tiefgezogen sind, wobei die Trennfolie (3) zwischen dem Zahnmodell (2) und einer der Schienenfolie (4) angeordnet ist und diese voneinander trennt.

Um eine Vorrichtung zur schnelleren und sichereren Entnahme der Schienenfolie von dem Zahnmodell bereitzustellen, wird erfindungsgemäß vorgeschlagen, dass die Trennfolie (3) einen freistehenden Griffbereich (12) abseits des eigentlichen Zahnmodells (2) aufweist, der händisch greifbar ist.

## Beschreibung

### Einleitung

Die Erfindung betrifft eine Vorrichtung zur Herstellung einer Zahnschiene, umfassend ein Zahnmodell, eine Schienenfolie und eine Trennfolie, wobei die Trennfolie zwischen dem Zahnmodell und einer Schienenfolie angeordnet ist und diese voneinander trennt. Die Trennfolie und die Schienenfolie sind typischerweise nicht miteinander verklebt.

### Stand der Technik

Vorrichtungen der eingangsbeschriebenen Art sind aus dem Stand der Technik bekannt und werden zur Herstellung von Zahnschienen verwendet. Typischerweise werden diese Art der Zahnschienen zur Korrektur von Zahnfehlstellungen eingesetzt. Das heißt, dass mit Hilfe der Zahnschienen eine Zahnstellung von einem Ist-Zustand in einen Soll-Zustand überführt werden soll.

Um die Zähne von dem Ist-Zustand in den Soll-Zustand zu überführen, müssen manche Zähne bis zu mehreren Millimeter bewegt werden. Eine einzelne Zahnschiene kann jedoch lediglich eine Korrektur von 0,2 mm bis 0,3 mm bewirken, weshalb typischerweise mehrere, nacheinander zu verwendende und in ihrer individuellen Form unterschiedliche Zahnschienen verwendet werden müssen, um die Überführung der zu behandelnde Zähne von ihrem Ist-Zustand zu ihrem schlussendlichen Soll-Zustand erreichen zu können. Die einzelnen Zahnschienen müssen dazu in einer vorgegebenen Reihenfolge jeweils für typischerweise ein bis zwei Wochen eingesetzt werden. Dabei ist vorgesehen, dass jede weitere Zahnschiene die Zähne immer mehr in Richtung des Soll-Zustands überführt bis schließlich die letzte Zahnschiene die Zähne in ihren Soll-Zustand bringt.

Beim Herstellungsprozess jeder einzelnen Zahnschiene werden zunächst Zahnmodelle benötigt, die entsprechende Zwischenschritte zwischen dem Ist-Zustand und dem Soll-Zustand der Zähne widerspiegeln. Zur Ausformung der einzelnen Zahnschienen werden erst die Trennfolie und anschließend die Schienenfolie über das jeweilige Zahnmodell tiefgezogen. Die Trennfolie soll verhindern, dass die Schienenfolie in die Zahnzwischenräume des Zahnmodells eindringt. Ein Eindringen der Schienenfolie in die Zahnzwischenräume würde nämlich dazu führen, dass die Schienenfolie sich nicht mehr von dem Zahnmodell entfernen lässt. Nachdem die Schienenfolie ausgehärtet ist, werden die Trennfolie und die Schienenfolie zunächst bis zum Rand des Zahnmodells hin gekürzt.

Typischerweise geschieht dies mittels eines Umbohrens oder Ausschneidens der Schienenfolie..Anschließend wird die Schienenfolie mittels eines Heraushebelns oder - drückens von dem Zahnmodell entnommen. Dies ist jedoch ein relativ zeitaufwendiger Arbeitsschritt, da die Schienenfolie sich den Zahnkonturen gut angepasst hat und sich somit an einigen Ecken mit dem Zahnmodell verkeilt. Nachdem die Schienenfolie von dem Zahnmodell entnommen wurde, wird die Schienenfolie weiter bearbeitet, sodass diese in einem fertigen Zustand die eigentliche Zahnschiene bildet. Beispielsweise kann die Zahnschiene aus der Schienenfolie ausgeschnitten werden.

Als nachteilig hat sich herausgestellt, dass ein Umbohren oder Zuschneiden der Schienenfolie nicht nur sehr zeitaufwendig und fehleranfällig ist, sondern zudem zu Beschädigungen an der ausgehärteten Schienenfolie führen kann. Ein weiterer Nachteil besteht darin, dass bei der Entnahme die Trennung von Zahnmodell und Schienenfolie ebenfalls zeitaufwendig ist und aufgrund des kraftintensiven Vorgehens zu einer Beschädigung der Schienenfolie - und mithin der eigentlichen Zahnschiene - führen kann.

### Aufgabe

Der vorliegenden Erfindung liegt nunmehr die Aufgabe zugrunde, eine Vorrichtung zur schnelleren und sichereren Entnahme der Schienenfolie von dem Zahnmodell bereitzustellen.

### Lösung

Ausgehend von einer Vorrichtung der eingangs beschriebenen Art wird die zugrunde liegende Aufgabe dadurch gelöst, dass die Trennfolie einen freistehenden Griffbereich abseits des Zahnmodells aufweist, der händisch greifbar ist.

Unter dem "freistehenden Griffbereich" kann im Sinne der vorliegenden Anmeldung ein Bereich der Trennfolie verstanden werden, der über das Zahnmodell übersteht und derartig groß ist, dass dieser händisch, vorzugsweise zwischen Daumen und Zeigefinger, gegriffen werden kann. Die Anordnung "abseits des Zahnmodells" beschreibt dabei eine Ausgestaltung, bei der der Griffbereich gewissermaßen neben dem Zahnmodell angeordnet ist. Typischerweise erstreckt sich der Griffbereich in einer Folienebene, die bündig mit einer Unterseite des Zahnmodells abschließt. Die Folienebene ist die Ebene der Trennfolie bzw. Schienenfolie, die die jeweilige Folie vor dem Tiefziehen über das Zahnmodell aufwies. Infolge des Tiefziehens werden die Folien derart verformt, dass ein Negativ des Zahnmodells an einer Oberseite der Folie über die Folienebene hinaus vorsteht.

Die Besonderheit der vorliegenden Erfindung besteht darin, dass das Zahnmodell mit Hilfe des Griffbereichs der Trennfolie in einem Arbeitsschritt aus der ausgehärteten Schienenfolie entnommen werden kann. Der Griffbereich bietet hierzu eine geeigneten Kraftansetzstelle, mittels der die Trennfolie unabhängig von der Schienenfolie greifbar ist, sodass eine Kraft auf die Trennfolie und das Zahnmodell ausübbar ist, ohne gleichzeitig die Schienenfolie zu beeinflussen. Dies erleichtert die Ausübung voneinander weg gerichteter Kräfte auf die Schienenfolie und die Trennfolie, wodurch letztlich besonders einfach die beiden Folien voneinander trennbar sind. Vorzugsweise werden die Schienenfolie mit der einen Hand und die Trennfolie mit der anderen Hand festgehalten. Ein umständliches Herausdrücken oder - hebeln des Zahnmodells aus der Schienenfolie ist somit nicht mehr erforderlich. Daraus resultiert eine Zeitersparnis des Arbeitsschrittes und eventuelle Beschädigungen an der Schienenfolie können somit vermieden werden. Ferner ist ein anschließendes Zuschneiden der Schienenfolie aufgrund des nicht mehr vorhandenen Zahnmodells vereinfacht, da die Schienenfolie besser zugänglich ist.

Eine besonders einfache Handhabung liegt vor, wenn sich der freistehende Griffbereich der Trennfolie an distalen Enden eines Kiefers des Zahnmodells befindet. Gemäß der vorliegenden Anmeldung beschreiben die jeweiligen distalen Enden des Kiefers des Zahnmodells die beiden Enden des Zahnbogens an dem sich die hintersten (Backen-)Zähne des jeweilig in dem Zahnmodell abgebildeten Kiefers, die lediglich einem Nachbarzahn aufweisen, befinden. Dies bringt den Vorteil mit sich, dass die Zähne des Zahnmodells bei einer Entnahme nicht in der Schienenfolie blockieren, wie dieses beispielsweise der Fall wäre, wenn der Griffbereich im Bereich der Schneidzähne angeordnet wäre. Denn die Schneidezähne sind labial, also zum Lippenbereich hin geneigt, und somit schräg zum Griffbereich der Trennfolie sowie dem überstehenden Bereich der Schienenfolie angeordnet und würden bei einer Entnahme in der Schienenfolie verhaken. Der sich dadurch ergebende Widerstand würde schließlich eine Entnahme des Zahnmodells aus der Schienenfolie verhindern. Alternativ wäre auch ein Griffbereich an den beiden Seitenzahnbereichen denkbar.

Die Anordnung des Griffbereichs der Trennfolie an den distalen Enden des Zahnmodells bringt weiterhin den Vorteil mit sich, dass der Kraftaufwand zur Entnahme des Zahnmodells mitsamt der Trennfolie aus der Schienenfolie sehr gering gehalten wird, da eine Kraftübertragung an zwei Punkten, nämlich den beiden distalen Enden des Zahnmodells und nicht nur an einem, stattfindet. Dies stellt eine Vereinfachung insbesondere gegenüber dem aus dem Stand der Technik bekannten Entfernungsprozess dar, da ein Herausziehen oder Heraushebeln der Schienenfolie an mehreren Punkten gleichzeitig erfolgen kann und nicht nur punktuell stattfindet.

Aufgrund der Anordnung des freistehenden Griffbereichs der Trennfolie an den distalen Enden des Kiefers des Zahnmodells kann weiterhin eine Materialersparnis erzielt werden, denn der überstehende Bereich der Trennfolie ist im Bereich der distalen Enden des Zahnmodells anatomisch bedingt am größten, da in diesem Bereich eine Ausnehmung zwischen den beiden distalen Enden vorhanden ist, in welcher produktionstechnisch automatisch ein überstehender Bereich der Trennfolie vorhanden ist. Folglich ist, auch wenn der Überstand der Trennfolie beim restlichen Zahnmodell nur sehr gering ist, bereits mit einem geringen Materialeinsatz ein ausreichend großer Griffbereich der Trennfolie gegeben.

Bei der Entnahme des Zahnmodells aus der Schienenfolie mit Hilfe der Trennfolie muss ein Reißen der Trennfolie zwingend verhindert werden, weshalb erfindungsgemäß angestrebt wird, dass die Trennfolie eine Zugfestigkeit zwischen 40 MPa und 75 MPa, vorzugsweise zwischen 42 MPa und 70 MPa aufweist. Ein Reißen der Trennfolie würde dazu führen, dass das Zahnmodell, wie dieses bereits im Stand der Technik der Fall ist, mit viel Mühe aus der Schienenfolie herausgehebelt oder herausgedrückt werden muss. Dies soll verhindert werden, weshalb die Trennfolie reißfest ausgeformt sein soll.

Gemäß einer Weiterentwicklung der Erfindung ist vorgesehen, dass die der Schienenfolie zugewandte Seite der Trennfolie eine höhere Rauheit aufweist als eine der Schienenfolie abgewandten Seite der Trennfolie. Dabei sollte die Rauheit der der Schienenfolie zugewandten Seite der Trennfolie derart hoch sein, dass sich bei einem Tiefziehen der Schienenfolie eine lösbare Verbindung zwischen der Trennfolie und der Schienenfolie ergibt.

Vorteilhafterweise sind die Trennfolie und die Schienenfolie zeitgleich über das Zahnmodell tiefgezogen. Folglich kann ein weiterer Verarbeitungsschritt eingespart werden, denn es muss nicht erst die Trennfolie und anschließend die Schienenfolie über das Zahnmodell tiefgezogen werden, sondern das Tiefziehen der Trennfolie und der Schienenfolie kann in einem gemeinsamen Schritt erfolgen.

Schließlich ist noch vorgesehen, dass die Trennfolie bereits vor dem Tiefziehen lösbar mit der Schienenfolie verbunden ist. Auch bei dieser Vorgehensweise werden gleichwohl sowohl die Trennfolie als auch die Schienenfolie über das Zahnmodell in einem Schritt tiefgezogen.

### Ausführungsbeispiel

Die vorstehend beschriebene Erfindung wird nachfolgend anhand eines Ausführungsbeispiels, welches in den Figuren dargestellt ist, näher erläutert.

Es zeigt:
- Fig. 1:: eine Explosionsdarstellung einer erfindungsgemäßen Vorrichtung,
- Fig. 2:: eine Unteransicht der erfindungsgemäßen Vorrichtung gemäß Figur 1, und
- Fig. 3:: eine Seitenansicht der erfindungsgemäßen Vorrichtung gemäß Figur 1 .

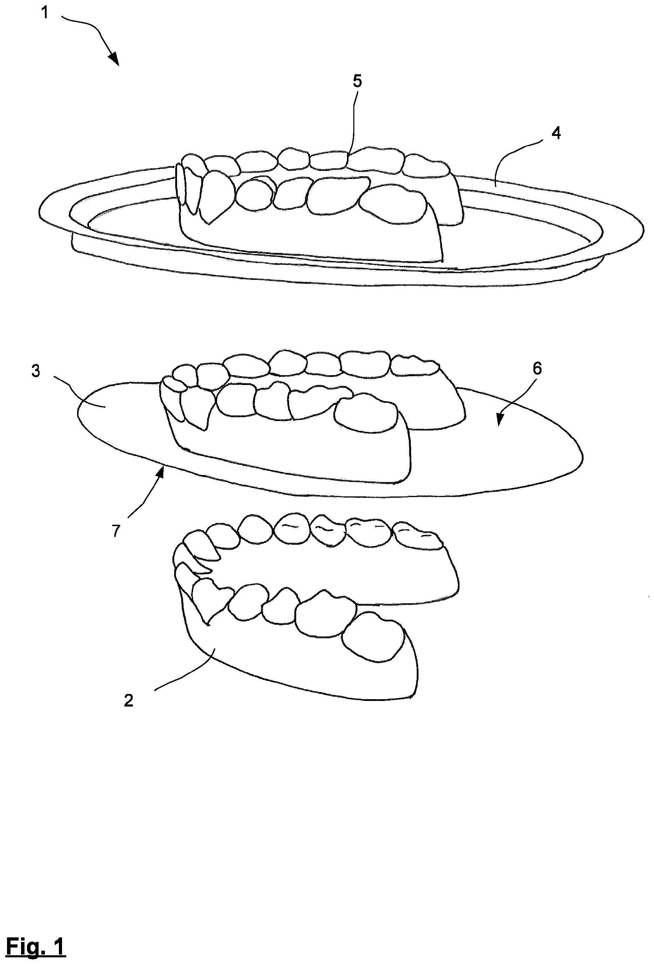

Das Ausführungsbeispiel, das in der **Figur 1** als Explosionsdarstellung gezeigt ist, umfasst eine erfindungsgemäße Vorrichtung **1** mit einem Zahnmodell **2**, einer Trennfolie **3** und einer Schienenfolie **4**. Die Trennfolie **3** ist zwischen der Schienenfolie **4** und dem Zahnmodell **2** angeordnet und verhindert somit, dass die Schienenfolie **4** bei einem Tiefziehen über das Zahnmodell **2** in Zahnzwischenräume **5** des Zahnmodells **2** gelangt. Zugleich erleichtert die Trennfolie **3** mittels der Beschaffenheit ihrer der Schienenfolie **4** zugewandten Seite **6** eine Ablösung der Schienenfolie **4** von der Trennfolie **3**.

Zur Herstellung einer hier nicht dargestellten Zahnschiene werden die Schienenfolie **4** und die Trennfolie **3** über das Zahnmodell **2** tiefgezogen. Das Tiefziehen der Schienenfolie **4** und der Trennfolie **3** kann sowohl nacheinander als auch zeitgleich erfolgen. Die der Schienenfolie **4** zugewandte Seite **6** der Trennfolie **3** hat eine höhere Rauheit als eine der Schienenfolie **4** abgewandte Seite **7** der Trennfolie **3**, so dass die Schienenfolie **4** und die Trennfolie **3** beim Tiefziehen keine unlösbare Verbindung eingehen.

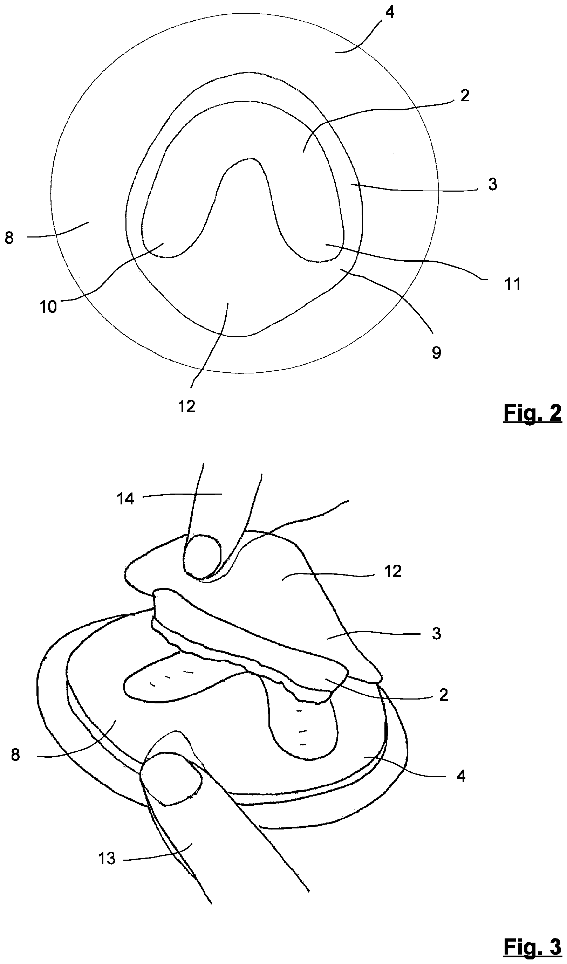

In **Figur 2** ist das Zahnmodell **2** mit der darüber tiefgezogenen Trennfolie **3** und Schienenfolie **4** in einer Unteransicht dargestellt. Eine Aushärtung der Schienenfolie **4** hat in dem gezeigten Zustand bereits stattgefunden. Die Schienenfolie **4** und die Trennfolie **3** überlappen das Zahnmodell **2**, so dass sowohl ein überstehender Bereich **8** der Schienenfolie **4** als auch ein überstehender Bereich **9** der Trennfolie **3** vorhanden sind. Der an distalen Enden **10**, **11** des Zahnmodells **2** angeordnete überstehende Bereich **9** der Trennfolie **3** bildet erfindungsgemäß einen freistehenden Griffbereich **12**.

In **Figur 3** wird die Entnahme des Zahnmodells **2** aus der Schienenfolie **4** dargestellt. Dazu ist vorgesehen, dass mit einer Hand **13** die Schienenfolie **4** an einem beliebigen Punkt des überstehenden Bereichs **8** der Schienenfolie **4** festgehalten wird. Mit einer anderen Hand **14** wird der Griffbereich **12** der Trennfolie **3** gefasst und mitsamt dem Zahnmodell **2** aus der Schienenfolie **4** herausgezogen. Damit die Trennfolie **3** während des Herausziehens des Zahnmodells **2** aus der Schienenfolie **4** nicht reißt, weist sie eine Zugfestigkeit von 50 MPa auf.

Anschließend wird aus der Schienenfolie **4** eine hier nicht dargestellte Zahnschiene herausgearbeitet, insbesondere herausgeschnitten.

### Bezugszeichenliste

- 1: Vorrichtung
- 2: Zahnmodell
- 3: Trennfolie
- 4: Schienenfolie
- 5: Zahnzwischenraum
- 6: Seite
- 7: Seite
- 8: Bereich
- 9: Bereich
- 10: distales Ende
- 11: distales Ende
- 12: Griffbereich
- 13: Hand
- 14: Hand

## Patentansprüche

1. Vorrichtung (1) zur Herstellung einer Zahnschiene, umfassend
- ein Zahnmodell (2),
- eine Schienenfolie (4) und
- eine Trennfolie (3),
wobei die Trennfolie (3) und die Schienenfolie (4) gemeinsam über das Zahnmodell (2) tiefgezogen sind,
wobei die Trennfolie (3) zwischen dem Zahnmodell (2) und der Schienenfolie (4) angeordnet ist und diese voneinander trennt,
**dadurch gekennzeichnet, dass**
die Trennfolie (3) einen freistehenden Griffbereich (12) abseits des Zahnmodells (2) aufweist, der händisch greifbar ist.

2. Vorrichtung nach Anspruch 1, **dadurch, gekennzeichnet, dass** sich der freistehende Griffbereich (12) der Trennfolie (3) an distalen Enden (10, 11) eines Kiefers des Zahnmodells (2) befindet.

3. Vorrichtung nach Anspruch 1 oder 2, **dadurch gekennzeichnet, dass** die Trennfolie (3) eine Zugfestigkeit zwischen 40 MPa und 75 MPa, vorzugsweise zwischen 42 MPa und 70 MPa aufweist.

4. Vorrichtung nach mindestens einem der Ansprüche 1 bis 3, **dadurch gekennzeichnet, dass** eine der Schienenfolie (4) zugewandte Seite (6) der Trennfolie (3) eine höhere Rauheit aufweist als eine der Schienenfolie (4) abgewandten Seite (7) der Trennfolie (3).

5. Vorrichtung nach mindestens einem der Ansprüche 1 bis 4, **dadurch gekennzeichnet, dass** die Trennfolie (3) und die Schienenfolie (4) zeitgleich über das Zahnmodell (2) tiefgezogen sind.

6. Vorrichtung nach einem der Ansprüche 1 bis 5, **dadurch gekennzeichnet, dass** die Trennfolie (3) bereits vor dem Tiefziehen lösbar mit der Schienenfolie (4) verbunden ist.
